(19) Europäisches Patentamt
European Patent Office
Office européen des brevets

(11) Veröffentlichungsnummer: **0 651 026 A1**

# (12) EUROPÄISCHE PATENTANMELDUNG

(21) Anmeldenummer: **94116119.2**

(22) Anmeldetag: **13.10.94**

(51) Int. Cl.[6]: **C09B 41/00**, C09B 67/00

(30) Priorität: **30.10.93 DE 4337143**

(43) Veröffentlichungstag der Anmeldung:
**03.05.95 Patentblatt 95/18**

(84) Benannte Vertragsstaaten:
**CH DE GB LI**

(71) Anmelder: **HOECHST MITSUBISHI KASEI CO., LTD.**
**10-33, Akasaka 4-chome**
**Minato-ku,**
**Tokyo (JP)**

(72) Erfinder: **Bühler, Ulrich, Dr.**
**Kastanienweg 8**
**D-63755 Alzenau (DE)**
Erfinder: **Kühlwein, Jürgen, Dr.**
**Konrad-Adenuer-Strasse 36 a**
**D-63150 Heusenstamm (DE)**

(74) Vertreter: **Muley, Ralf, Dr.**
**Cassella AG,**
**Patentabteilung,**
**Hanauer Landstrasse 526**
**D-60386 Frankfurt (DE)**

## (54) Verfahren zur Herstellung von Azofarbstoffen.

(57) Die vorliegende Erfindung betrifft ein Verfahren zur Herstellung von Azofarbstoffen der allgemeinen Formel I

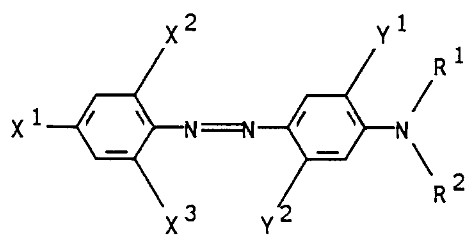

(I)

worin $X^1$, $X^2$, $X^3$, $Y^1$, $Y^2$, $R^1$ und $R^2$ wie in Anspruch 1 angegeben definiert sind durch Diazotieren eines Amins der allgemeinen Formel II

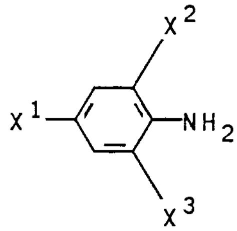

(II)

und Kupplung in wäßrig saurem Medium in Gegenwart eines Polyglykols auf Basis von Fettalkoholen auf eine Verbindung der allgemeinen Formel III

EP 0 651 026 A1

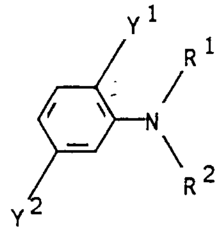

(III)

Die Erfindung betrifft ein Verfahren zur Herstellung von Azofarbstoffen durch Diazotierung und Kupplung.

Zur Fabrikation von Azofarbstoffen besitzt das Verfahren der Diazotierung und Kupplung eine überragende Bedeutung. Dieses Verfahren wird zumeist zweistufig durchgeführt. Zunächst wird bei der Diazotierung ein diazotierbares aromatisches oder heteroaromatisches Amin in Anwesenheit von wäßriger Mineralsäure z.B. durch Einwirkung von in situ erzeugter salpetriger Säure in eine mineralsaure Lösung oder Suspension eines Diazoniumsalzes überführt. In der zweiten Stufe der Kupplung wird die wäßrige Lösung oder Suspension des Diazoniumsalzes mit der wäßrigen Lösung oder der Suspension einer Kupplungskomponente vereinigt. Im allgemeinen läßt man dabei die mineralsaure Lösung oder Suspension des Diazoniumsalzes in die wäßrige Lösung oder Suspension der Kupplungskomponente einlaufen. Meist wird dabei durch Zugabe von Basen, wie z.B. Alkalihydroxiden, Alkalicarbonaten, Ammoniak, Calciumcarbonat, Magnesiumoxid und dergleichen oder von Puffersubstanzen der jeweilige optimale pH-Wert eingehalten.

Nach beendeter Kupplung liegt bei Dispersionsfarbstoffen, also in Wasser schwerlöslichen Azofarbstoffen, eine Suspension des Farbstoffs in Wasser vor, aus welcher der Farbstoff abfiltriert wird.

Von einem guten Fabrikationsverfahren wird dabei nicht nur eine hohe Raum-Zeit-Ausbeute und hohe Farbstoffausbeute mit hohem Reingehalt erwartet, sondern der Farbstoff soll nach beendeter Kupplung auch in Form eines gut filtrierbaren Produktes vorliegen. Außerdem soll dieses Produkt nach der Filtration einen Filterkuchen mit möglichst hohem Pastengehalt liefern.

Die Vorteile einer guten Filtrierbarkeit sind dabei z.B. kurze Filtrations- und Waschzeiten, geringe Wasch- und Abwassermengen, geringes Volumen des Filterkuchens sowie gute Auswaschbarkeit des Filterkuchens und damit höherer Farbstoffreingehalt. Bei entsprechend hohem Pastengehalt kann ein aufwendiges Trocknen der Paste für die Weiterverarbeitung entfallen.

Ein nachfolgender Aufmahlprozeß kann effektiver, d.h. in kürzerer Zeit und mit weniger Energieaufwand, durchgeführt werden, wenn der Pastengehalt des Filterkuchens hoch ist.

Bei einem sich gegebenenfalls an den Aufmahlprozeß anschließenden Sprühtrocknungsschritt, bei dem das Wasser des Mahlteiges durch Verdampfen entfernt wird, muß weniger Wasser verdampft werden, wenn der Pastengehalt des Filterkuchens höher ist. Der Sprühtrocknungsprozeß kann dann also schneller und mit geringerem Energieaufwand erfolgen.

Falls der herzustellende Dispersionsfarbstoff in zwei oder mehreren Kristallmodifikationen auftreten kann, so soll die Kupplungsreaktion möglichst die aus färberischer Sicht richtige, d.h. eine thermisch stabile bzw. die thermisch stabilste Modifikation ergeben. Nur dann ist nämlich gewährleistet, daß er bei der Sprühtrocknung zu einem feindispergierten Farbstoffpulver die dabei auftretende Temperaturbelastung ohne Qualitätseinbuße übersteht und beim Färben, insbesondere aus wäßrigem Färbebad, nicht seine Modifikation ändert und aus der wäßrigen Dispersion ausfällt. Letzteres würde zu nicht typkonformen, unegalen und damit nicht akzeptablen Färbungen führen.

Eine Verbesserung der Filtrierbarkeit und eine Erhöhung des Pastengehalts wird gewöhnlich durch Erhitzen des Ansatzes nach der Kupplung erzielt, wobei eine Vergröberung der Farbstoffkristalle eintritt. Bei bestimmten Farbstoffen tritt dabei auch die gewünschte Umwandlung in die stabilste Kristallmodifikation ein.

Bei den dazu erforderlichen hohen Temperaturen kommt es jedoch im sauren Milieu mehr oder minder zur Zerstörung des Farbstoffs unter Spaltung der Azostruktur bzw. zur Verseifung säurelabiler Gruppen, was eine Verringerung der Ausbeute und/oder des Reingehalts bedingt. Dem versucht man durch Neutralisation des Ansatzes vor dem Erhitzen entgegenzuwirken. Dabei entstehen jedoch große Mengen Salz, die eine Abwasserbelastung darstellen. Darüber hinaus muß bei der Neutralisation die Neutralisationswärme durch Eiszugabe abgefangen werden und/oder das entstandene Salz muß vor der Filtration durch Wasserzusatz in Lösung gehalten werden, was die Volumenausbeute erniedrigt.

Man kann auch der Zerstörung des Farbstoffs entgegenwirken, indem man den Kupplungsansatz vor dem Erhitzen sehr stark mit Wasser verdünnt. Auf diese Weise wird ebenfalls, und zwar in ungleich größerem Ausmaß, die Volumenausbeute verringert.

Grundsätzlich bedeutet das Erhitzen nach der Kupplung eine Verlängerung der Fertigungsdauer sowie eine Erhöhung des Energieaufwands durch Aufheizen und Abkühlen.

In der EP-A 240 902 wird zur Lösung dieses Problems ein Verfahren zur Herstellung von Azodispersionsfarbstoffen durch Diazotierung und Kupplung vorgeschlagen, bei dem die Kupplung in Anwesenheit eines Esters einer gegebenenfalls substituierten niederaliphatischen Carbonsäure und eines gegebenenfalls substituierten aliphatischen Alkohols durchgeführt wird. Zweckmäßigerweise werden dabei bei der Kupplung auch oberflächenaktive Substanzen eingesetzt.

Allerdings weist dieses Verfahren erhebliche Nachteile auf. Problematisch ist beispielsweise die Einwirkung der verwendeten Ester auf gummierte Kesselinnenwände, die zum Aufquellen der Gummibeschichtung und langfristig zu deren Versprödung und Zerstörung führt. Weiterhin bringen die Handhabung und

Verwendung dieser Ester aufgrund ihres hohen Dampfdrucks und ihrer Geruchsintensität erhebliche Geruchsbelästigungen mit sich.

Problematisch ist auch die Explosionsfähigkeit von Ester/Luft-Gemischen, wie sie bei der Handhabung der Ester aber auch bei der Kupplung selbst auftreten können. Umfangreiche Sicherheitsmaßnahmen an den Apparaturen bzw. in den Betrieben sind somit erforderlich.

Nachteilig ist auch die Abwasserbelastung des Verfahrens gemäß EP-A 240 902 aufgrund der Ester selbst oder deren Verseifungsprodukte, so daß aufwendige Abwasseraufbereitungsmaßnahmen erforderlich sind.

In der EP-A 563 975 wird vorgeschlagen, die aus der Kupplungsreaktion resultierende Lösung einer Hitzebehandlung in Gegenwart eines nichtionischen Tensids vom Typ eines Fettsäurepolyoxyethylenesters zu unterwerfen. Die oben geschilderten mit dem Erhitzen verbundenen Nachteile liegen also auch hier vor.

Es besteht also dringender Bedarf nach einer Verbesserung des Verfahrens zur Herstellung von Dispersionsfarbstoffen.

Es wurde nun überraschenderweise gefunden, daß die mit den bekannten Verfahren verbundenen Nachteile vermieden werden und ohne Hitzebehandlung Filterkuchen mit sehr guter Filtrierbarkeit und sehr hohen Pastengehalten erhalten werden können, wobei der Farbstoff bereits in der stabilsten Kristallmodifikation anfällt, wenn bei der Herstellung durch Diazotierung und Kupplung die Kupplung in Gegenwart von Polyglykolen auf Basis von Fettalkoholen ausgeführt wird.

Dies ist umso überraschender, als im Beispiel 6 der EP-A 240 902 der Farbstoff nur dann in der stabilen Kristallmodifikation anfällt, wenn neben der oberflächenaktiven Substanz (hier Blockpolymerisat aus Polypropylenglykol und Ethylenoxid) auch ein Carbonsäureester (hier Butylacetat) als Kupplungshilfsmittel verwendet wird. Auch gemäß Beispiel 8d der EP-A 240 902 wird ohne Esterzusatz und nur in Gegenwart eines oberflächenaktiven Ligninsulfonates nur die instabile Modifikation erhalten.

Die vorliegende Erfindung betrifft ein Verfahren zur Herstellung von Azofarbstoffen der allgemeinen Formel I

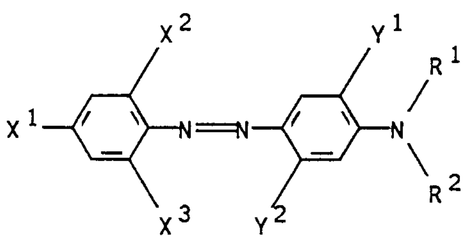

(I)

worin

- $X^1$ Nitro oder Methyl;
- $X^2$ Nitro, Cyan oder Halogen;
- $X^3$ Halogen oder Wasserstoff;
- $Y^1$ Wasserstoff, Chlor, Methoxy, Ethoxy, Methoxyethoxy oder Ethoxyethoxy;
- $Y^2$ Wasserstoff, Methyl, Chlor, Acetylamino oder Propionylamino;
- $R^1$ $(C_1$-$C_4)$-Alkyl, Phenethyl, Methoxyethyl, Ethoxyethyl, Phenoxyethyl, Acetoxyethyl, Propionyloxyethyl oder Benzoyloxyethyl und
- $R^2$ $(C_1$-$C_4)$-Alkyl, Methoxyethyl, Ethoxyethyl, Acetoxyethyl, Propionyloxyethyl, Cyanethyl oder Wasserstoff

bedeuten,
durch Diazotierung eines Amins der allgemeinen Formel II

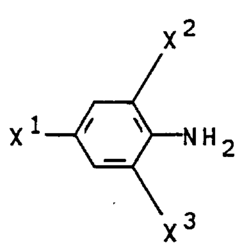

(II)

und Kupplung in wäßrig saurem Medium auf eine Verbindung der allgemeinen Formel III

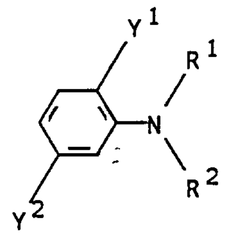

(III)

wobei $X^1$, $X^2$, $X^3$, $Y^1$, $Y^2$, $R^1$ und $R^2$ wie oben angegeben definiert sind, dadurch gekennzeichnet, daß die Kupplung in Gegenwart eines oder mehrerer Polyglykole auf Basis von Fettalkoholen und in Abwesenheit eines Carbonsäureesters durchgeführt wird.

Für $R^1$ oder $R^2$ stehendes $(C_1\text{-}C_4)$-Alkyl kann geradkettig oder verzweigt sein und bedeutet beispielsweise Methyl, Ethyl, n-Propyl, i-Propyl, n-Butyl, iso-Butyl, sek-Butyl oder tert-Butyl. Methyl, Ethyl und n-Propyl sind bevorzugt.

Für $X^2$ oder $X^3$ stehendes Halogen ist Fluor und insbesondere Chlor oder Brom.

In bevorzugten Farbstoffen der allgemeinen Formel I bedeuten $X^1$ und $X^2$ Nitro, $X^3$ Chlor oder Brom, $Y^1$ Methoxy oder Ethoxy, $Y^2$ Acetylamino und $R^1$ und $R^2$ Acetoxyethyl.

Die Verbindungen der allgemeinen Formeln II und III sind bekannt und können nach bekannten Methoden hergestellt werden.

Unter Polyglykolen auf Basis von Fettalkoholen werden im Rahmen der vorliegenden Erfindung insbesondere solche Verbindungen verstanden, die durch Umsetzung von gesättigten oder ungesättigten Fettalkoholen mit 10 bis 20 Kohlenstoffatomen mit 5 bis 25 Mol Ethylenoxid erhalten werden können.

Geeignete Fettalkohole sind dabei insbesondere Isotridecylalkohol, gesättigte Kokosfettalkohole mit 10 bis 18 Kohlenstoffatomen, gesättigte Talgfettalkohole mit 16 bis 18 Kohlenstoffatomen, ungesättigte Oleylalkohole mit 16 bis 18 Kohlenstoffatomen oder auch Stearylalkohol.

Bevorzugte erfindungsgemäß einzusetzende Polyglykole sind solche der allgemeinen Formel IV

$RO(CH_2CH_2O)_nH$ (IV)

worin
R $(C_{10}\text{-}C_{18})$-Alkyl oder $(C_{10}\text{-}C_{18})$-Alkenyl und
n eine Zahl von 5 bis 25
bedeuten.

Für R stehendes $(C_{10}\text{-}C_{18})$-Alkyl oder -Alkenyl kann geradkettig oder verzweigt sein. Bevorzugt ist $(C_{13}\text{-}C_{18})$-Alkyl oder -Alkenyl, besonders bevorzugt $(C_{16}\text{-}C_{18})$-Alkyl oder -Alkenyl.

n ist bevorzugt eine Zahl von 8 bis 23, besonders bevorzugt von 9 bis 20.

Polyglykole können durch den sogenannten HLB-Wert (hydrophilic lipophilic balance) definiert werden. Dieser ist definiert als

$$HLB = \frac{E + P}{5}$$

wobei E der Gewichtsprozentsatz des Polyoxyethylenteils, im Fall der allgemeinen Formel IV also des Teils $(OCH_2CH_2)_nH$, im Molekül und P der Gewichtsprozentsatz des Fettalkylteils (im Fall der allgemeinen Formel IV also des Teils R), ist.

Die HLB-Werte der erfindungsgemäß einzusetzenden Polyglykole liegen bevorzugt bei 11 bis 16, besonders bevorzugt bei 12 bis 15.

Bevorzugte erfindungsgemäß einzusetzende Polyglykole sind insbesondere solche mit bevorzugten Bedeutungen von R und n und mit bevorzugten HLB-Werten. Besonders bevorzugte erfindungsgemäß einzusetzende Polyglykole sind solche mit besonders bevorzugten Bedeutungen von R und n und mit besonders bevorzugten HLB-Werten.

Die erfindungsgemäß einzusetzenden Polyglykole können zum Beispiel in an sich bekannter Weise durch Umsetzung von Fettalkoholen mit Ethylenoxid hergestellt werden. Sie sind aber auch im Handel käuflich zu erwerben.

Bei der Durchführung des erfindungsgemäßen Verfahrens wird zunächst eine Diazokomponente in üblicher Weise in Wasser diazotiert, und die dadurch erhaltene Lösung oder Dispersion der Diazoniumverbindung wird dann mit einer wäßrigen Lösung oder Dispersion einer Kupplungskomponente vereinigt, wobei die Kupplung in Gegenwart eines Polyglykols der genannten Art durchgeführt wird. Vorzugsweise läßt man dabei die Lösung oder Dispersion des Diazoniumsalzes in die Lösung oder Dispersion der Kupplungskomponente einlaufen. Aber auch die umgekehrte Arbeitsweise ist möglich, bei der man die Lösung oder Dispersion der Kupplungskomponente in die Lösung oder Dispersion des Diazoniumsalzes einlaufen läßt. Bei beiden Arbeitsweisen wird das Polyglykol normalerweise vor Beginn der Kupplung der Lösung oder Dispersion der Kupplungskomponente zugefügt. Es kann jedoch auch vor Beginn der Kupplung der Lösung oder Dispersion des Diazoniumsalzes, oder sowohl der Diazo- als auch Kupplungslösung oder -dispersion zugefügt werden. Darüber hinaus kann das Polyglykol aber auch portionsweise oder kontinuierlich während der Kupplung zugefügt werden.

Die zur Anwendung kommende Menge des Polyglykols ist, bezogen auf die nach beendeter Kupplung vorliegende Größe des Ansatzes, nur gering. Bezogen auf die bei der Kupplung erhaltene Farbstoffmenge, trocken gerechnet, kommen bei dem erfindungsgemäßen Verfahren bevorzugt 0,1 bis 5 Gew.%, besonders bevorzugt 0,2 bis 2 Gew.%, zum Einsatz.

Bezogen auf die Wassermenge der Kupplungslösung bzw. -dispersion sind dies Mengen von 0,01 bis 1 Gew.% des Polyglykols.

Bezieht man die zum Einsatz kommende Polyglykolmenge auf die Gesamtwassermenge des Ansatzes, d.h. auf die Wassermenge, die aus der Diazolösung bzw. -suspension und aus der Kupplungslösung bzw. -suspension stammt und auch die Menge beinhaltet, die in Form von Eis oder Wasser zum Kühlen und/oder Verdünnen dem Reaktionsansatz zugesetzt wird, dann handelt es sich um Mengen von etwa 10 ppm bis 0,5 Gew.% Polyglykol.

Es können im Prinzip auch größere Mengen der Polyglykole eingesetzt werden, doch bringt dies keine weiteren Vorteile und verbietet sich somit aus wirtschaftlichen und ökologischen Gründen. Höhere Einsatzmengen führen auch dazu, daß Restmengen auf dem Filterkuchen verbleiben, die sich auf die thermische Stabilität der Farbstoffpulver bei der Sprühtrocknung, die Stabilität der wäßrigen Farbstoffdispersionen und die Benetzbarkeit der Farbstoffpulver negativ auswirken.

Die Herstellung der mineralsauren Lösung oder Suspension des Diazoniumsalzes, das bei dem erfindungsgemäßen Verfahren eingesetzt wird, erfolgt wie üblich dergestalt, daß ein Amin der allgemeinen Formel II in einer wäßrigen oder konzentrierten Mineralsäure mit einem Diazotierungsmittel umgesetzt wird. Beispiele für geeignete Säuren sind Phosphorsäure und insbesondere Salzsäure oder Schwefelsäure. Diazotierungsmittel sind z.B. die Salze der salpetrigen Säure, insbesondere die Alkalisalze wie z.B. Natriumnitrit oder salpetrige Säure entwickelnde Substanzen, wie z.B. Nitrosylschwefelsäure.

Bei der Diazotierung wird üblicherweise das zu diazotierende Amin in der Mineralsäure vorgelegt und das Diazotierungsmittel zudosiert. In besonderen Fällen kann jedoch auch das Diazotierungsmittel, z.B. Nitrosylschwefelsäure, vorgelegt und das zu diazotierende Amin eingetragen werden. Die Diazotierung erfolgt in Abhängigkeit von der Löslichkeit und der Basizität des zu diazotierenden Amins bzw. in Abhängigkeit von der Stabilität der Diazoniumverbindung bei Temperaturen von -25 bis 60 °C.

Die Herstellung der wäßrigen Lösung oder Dispersion der Kupplungskomponente erfolgt durch Eintragen der Kupplungskomponente der allgemeinen Formel III in Wasser und In-Lösung-Rühren oder feines Verteilen. Falls sich die Kupplungskomponente bei der Herstellung der Kupplungslösung nicht vollständig in der Wassermenge auflöst, kann sie durch Ansäuern mit einer Säure, wie z.B. einer Mineralsäure, wie Salzsäure, Schwefelsäure oder Phosphorsäure oder einer Carbonsäure, wie z.B. Essigsäure oder Propionsäure ganz oder teilweise in Lösung gebracht werden. Vorzugsweise wird die dabei benötigte Säure vor dem Eintragen der Kupplungskomponente zugesetzt. Selbstverständlich kann jedoch auch eine Suspension der Kupplungskomponente, in der die Kupplungskomponente also nur angelöst ist, zur Kupplung verwendet werden. Es ist dabei vorteilhaft, die Kupplungskomponente in der wäßrigen Phase fein zu verteilen, z.B. mit Hilfe eines Zackenrührers oder einer Stiftmühle.

Die Kupplungstemperatur liegt insbesondere im Bereich von -10 bis 80 °C, vorzugsweise bei -5 bis 30 °C und in Abhängigkeit von der Reaktivität bzw. Löslichkeit der Kupplungskomponente und der Reaktivität der Diazonium-Verbindung in vielen Fällen bei -10 bis 40 °C, ganz besonders bevorzugt bei 0 bis 20 °C.

Bei der Durchführung der Kupplung muß meist indirekt oder direkt, z.B. durch Zugabe von Eis, gekühlt werden.

Zur Beschleunigung der Kupplung und zum Abfangen der bei der Kupplung durch die mineralsaure Lösung der Diazonium-Verbindung in den Kupplungsansatz gelangenden Säure bzw. der bei der Kupplung frei werdenden Säure kann es zweckmäßig sein, in an sich bekannter Weise eine Base, insbesondere ein

Alkali- oder Erdalkalihydroxid, zuzusetzen oder die Reaktionsmischung zu puffern, um den optimalen pH-Wert bei der Kupplung einzuhalten. Zur Pufferung werden dem Reaktionsgemisch Puffersubstanzen zugesetzt. Puffersubstanzen sind z.B. die Alkali- oder Erdalkalisalze schwächerer Säuren, wie z.B. die Natriumsalze der Phosphorsäuren.

Durch das erfindungsgemäße Verfahren wird eine erhebliche Verbesserung der Kristallinität des hergestellten Farbstoffs bewirkt, was sich z.B. äußerst günstig auf das Filtrierverhalten des Farbstoffs auswirkt.

Der bei dem erfindungsgemäßen Verfahren nach der Kupplung ausgefallene Dispersions-Azofarbstoff kann sofort, ohne zusätzliche Wärmebehandlung, durch Filtration und Neutralwaschen isoliert werden. Die Filtrier- und Waschzeiten werden durch das erfindungsgemäße Verfahren erheblich verkürzt. Außerdem wird der Pastengehalt (d.h. Feststoffgehalt) des nach dem Abfiltrieren und Nachwaschen vorliegenden Filterkuchens erheblich erhöht. Außerdem entsteht bei dem erfindungsgemäßen Verfahren in den Fällen, in denen der Farbstoff in unterschiedlichen Modifikationen anfallen kann, die gewünschte färbestabile Modifikation.

Beispiel 1

262 g trockenes 2-Brom-4.6-dinitranilin werden in 30 min in 570 g 95 %ige Schwefelsäure eingetragen, unter Nachrühren vollständig gelöst und bei 20 bis 25 °C in 1 h mit 333,6 g 40 %iger Nitrosylschwefelsäure diazotiert. Nach zweistündigem Nachrühren wird so eine klare Diazolösung erhalten. Unterdessen wird eine Lösung von 362 g N.N-Bis-(acetoxyethyl)amino-2-methoxy-5-acetanilid in 220 g Essigsäure nacheinander mit 3000 g Wasser, 5 g Amidosulfonsäure und 5 g eines Fettalkoholpolyglykolethers auf Basis eines ungesättigten $C_{16}$-$C_{18}$-Alkohols mit einem HLB-Wert von 14 versetzt und anschließend durch Zugabe von 800 g Eis auf 0 °C abgekühlt. Dann wird innerhalb von 2 h die oben beschriebene Diazolösung gleichmäßig zugetropft, wobei durch gleichzeitige Zugabe von ca. 2000 g Eis die Kupplungstemperatur bei 0 bis 2 °C gehalten wird. Nachdem zur Vervollständigung der Reaktion der Ansatz ca. 1 h nachgerührt hat, wird der ausgefallene Farbstoff über eine Porzellannutsche abgesaugt, mit Wasser gewaschen und trockengeblasen. Es werden auf diese Weise 1490 g einer 40 %igen wasserfeuchten Farbstoffpaste erhalten. Der Farbstoff hat die Formel Ia

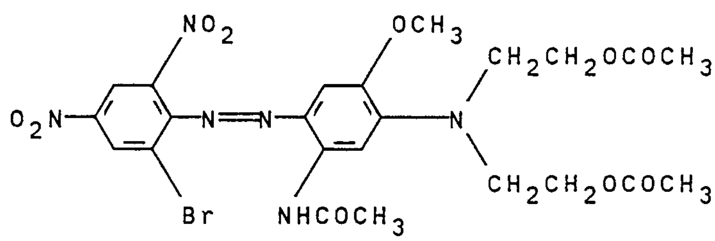

(Ia)

Eine getrocknete Probe dieser Paste zeigt im Röntgenbeugungsdiagramm (Cu-Kα-Strahlung) die charakteristischen Linien der färbestabilen β-Modifikation und zwar Linien hoher Intensität bei den Beugungswinkeln 2θ(°): 8,4; 7,9; 4,2; 3,8; 3,6; 3,5; und 3,3; und Linien mittlerer Intensität: 14,6; 9,8; 4,8; 4,5; 3,1 und 3,0 und ohne die typischen Linien der färbeinstabilen α-Modifikation bei 14,4; 6,1; 4,9 und 4,4. Die Partikelgrößenanalyse einer Farbstoffprobe zeigt nur ein Maximum bei 5 µm mit einer sehr engen Bandbreite.

100 g dieses Farbstoffs werden mit 110 g eines Ligninsulfonats, 7 g eines oxalkylierten Novolaks und Wasser in einer Sandmühle unter Kühlung gemahlen, bis 90 % der Teilchen gleich oder kleiner als 1 µm sind. Der so erhaltene Mahlteig wird in einem Zerstäubungstrockner bei einer Lufteingangstemperatur von 155 °C und einer Ausgangstemperatur von 80 °C getrocknet. Man erhält ein pulverförmiges, stippenfreies Farbstoffpulver, das allen Anforderungen genügt, insbesondere auch den verschärften Anforderungen, die erfüllt werden müssen, wenn in tiefen Tönen, mit kurzen Aufheizzeiten, mit kurzen Färbezeiten, mit kleinen Flottenverhältnis und hoher Zirkulation gefärbt werden soll und das zu färbende Gut auf Kreuzspulen und Wickelkörpern dicht gepreßt vorliegt und eine instabile Dispersion dann leicht zu Ausfällungen neigen und damit unegal färben würde.

Beispiel 2

Werden die 5 g des in Beispiel 1 eingesetzten Fettalkoholpolyglykolethers durch 4 g eines Fettalkoholpolyglykolethers auf Basis eines $C_{16}$-$C_{18}$-Oleylalkohol-Gemisches mit einem HLB-Wert von 15 ersetzt, so erhält man 1702 g einer 35 %igen wasserfeuchten Paste des gleichen Farbstoffs mit dem gleichen

Röntgenspektrum. Dieser Farbstoff hat sein alleiniges Korngrößenmaximum, ebenfalls mit sehr enger Bandbreite, bei 8 µm.

Beispiel 3

Werden die 262 g des in Beispiel 1 eingesetzten trockenen 2-Brom-4.6-dinitroanilins durch 217,5 g trockenen 2-Chlor-4.6-dinitroanilins ersetzt und weiter so verfahren, wie dort beschrieben, so erhält man 1414 g einer 39 %igen wäßrigen Paste des Farbstoffs der Formel Ib

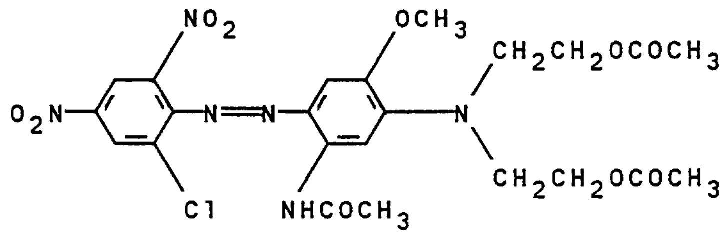

(Ib)

Dieser Farbstoff zeigt im Röntgenspektrum ebenfalls wieder die charakteristischen Linien seiner färbestabilen Modifikation, und zwar bei den Beugungswinkeln $2\theta(°)$: 9,0; 10,8; 12,2; 18,2; 21,3; 24,0; 25,5 und 27,4. In gefinishter Form genügt dieser Farbstoff ebenfalls allen technischen Anforderungen.

Beispiel 4

172,5 g trockenes 2-Chlor-4-nitroanilin werden in 400 g 95 %iger Schwefelsäure bei Raumtemperatur über Nacht angeschlagen und bei 25 °C in 1 h mit 324 g 40 %iger Nitrosylschwefelsäure diazotiert. Nach zweistündigem Nachrühren wird so eine klare Diazolösung erhalten. Unterdessen wird eine Lösung von 332 g 3-N.N-Bis(acetoxyethyl)aminoacetanilid in 220 g Essigsäure nacheinander mit 800 g Eiswasser, 50 g 95 %iger Schwefelsäure, 10 g Amidosulfosäure und 5 g eines Fettalkoholpolyglykolethers auf Basis eines Gemisches aus $C_{16}$-$C_{18}$ Talgfettalkoholen mit einem HLB-Wert von 14 versetzt. Dann wird innerhalb von 2 h bei 3 bis 5 °C die oben beschriebene Diazolösung zugetropft, wobei durch gleichzeitige Zugabe von 3000 g Eis die Kupplungstemperatur gehalten wird. Nachdem zur Vervollständigung der Reaktion nachgerührt worden ist, wird der ausgefallene Farbstoff der Formel Ic

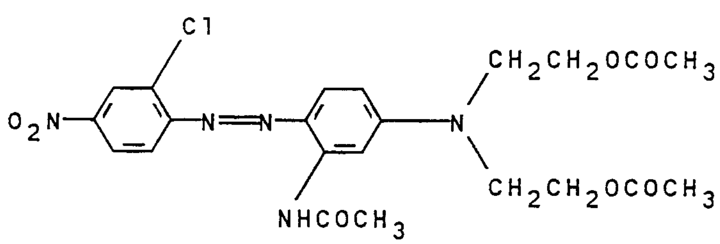

(Ic)

über eine Porzellannutsche abgesaugt, mit Wasser gewaschen und trockengeblasen. Die Filtrier- und Waschzeiten sind kurz, der Pastengehalt des Farbstoffs beträgt 39 %, das Maximum seiner Korngrößenverteilung liegt bei 35 µm (enge Bandbreite). Der Farbstoff selbst liegt in der färbestabilen Modifikation vor, so daß ein nach herkömmlicher Art und Weise gefinishtes Farbstoffpulver allen technischen Anforderungen genügt.

Beispiel 5

207 g 2.6-Dichlor-4-nitroanilin werden in 600 g 80 %iger Schwefelsäure bei 10 bis 15 °C in 1 h mit 333,6 g 40 %iger Nitrosylschwefelsäure diazotiert und es wird 2 h bei derselben Temperatur nachgerührt. Unterdessen werden 183 g N-Cyanethyl-N-ethylanilin in 500 g Wasser durch Zugabe von 100 g technischer Schwefelsäure und 10 g Amidosulfosäure gelöst, die Lösung durch Zugabe von etwas Eis auf 0 bis 2 °C gekühlt und mit 5 g eines Fettalkoholpolyglykolethers auf Basis eines gesättigten $C_{16}$-$C_{18}$-Talgfettalkoholsmit einem HLB-Wert von 13 versetzt. Zu dieser Lösung tropft man nun die oben beschriebene Diazolösung bei 0 bis 2 °C innerhalb von 2 h zu, wobei die Temperatur durch Zugabe von ca. 1500 g Eis gehalten wird. Nachdem zur Vervollständigung der Reaktion der Ansatz über Nacht gerührt worden ist, wird der ausgefallene Farbstoff abgesaugt, mit Wasser gewaschen und trockengeblasen. Es werden auf diese Weise 995 g einer 39 %igen Farbstoffpaste erhalten. Der Farbstoff hat die Formel Id

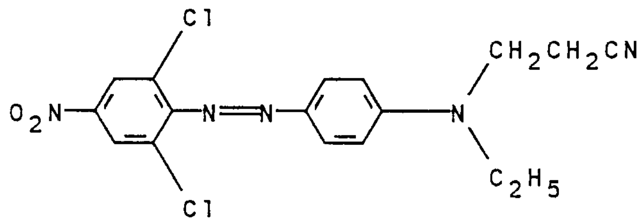

(Id)

Werden 100 g dieses Farbstoffs entsprechend den Angaben des Beispiels 1 in ein gefinishtes Farbstoffpulver überführt, so genügt dies allen Anforderungen bezüglich eines reproduzierbaren und homogenen Färbeergebnisses. Werden beispielsweise 5 g dieses Farbstoffpulvers in 800 g 40 °C warmem Wasser dispergiert und wird die so erhaltene Dispersion über ein Polyester-Baumwoll-Gewebe filtriert und dieses Gewebe anschließend getrocknet und 1 min bei 200 °C thermosoliert, so ist dieses Gewebe schwach orange angefärbt und zeigt praktisch keine Stippen.

Zum Vergleich wird der Farbstoff gemäß den Lehren der EP-A 240 902 hergestellt, indem anstelle des Fettalkoholpolyglykolethers 30 g Butylacetat bei der Kupplung zugesetzt werden. Wird dieser Farbstoff in ein Farbstoffpulver überführt und dieses dem oben beschriebenen Filtertest unterworfen, so zeigt das Polyester-Baumwoll-Gewebe eine vergleichweise hohe Anzahl von Stippen. Ein derartiges Pulver würde bei einem HT-Färbeprozeß und insbesondere bei einem Thermosolprozeß zu einem unegalen Ausfall der Färbung führen und wäre somit ungeeignet.

## Patentansprüche

1. Verfahren zur Herstellung von Azofarbstoffen der allgemeinen Formel I

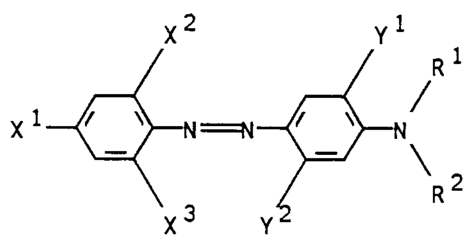

(I)

worin

- $X^1$ Nitro oder Methyl;
- $X^2$ Nitro, Cyan oder Halogen;
- $X^3$ Halogen oder Wasserstoff;
- $Y^1$ Wasserstoff, Chlor, Methoxy, Ethoxy, Methoxyethoxy oder Ethoxyethoxy;
- $Y^2$ Wasserstoff, Methyl, Chlor, Acetylamino oder Propionylamino;
- $R^1$ $(C_1\text{-}C_4)$-Alkyl, Phenethyl, Methoxyethyl, Ethoxyethyl, Phenoxyethyl, Acetoxyethyl, Propionyloxyethyl oder Benzoyloxyethyl und
- $R^2$ $(C_1\text{-}C_4)$-Alkyl, Methoxyethyl, Ethoxyethyl, Acetoxyethyl, Propionyloxyethyl, Cyanethyl oder Wasserstoff

bedeuten,

durch Diazotierung eines Amins der allgemeinen Formel II

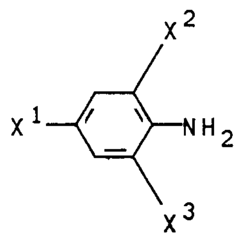

(II)

und Kupplung in wäßrig saurem Medium auf eine Verbindung der allgemeinen Formel III

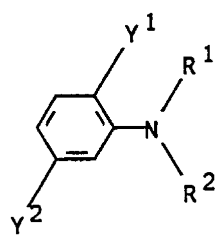

(III)

wobei $X^1$, $X^2$, $X^3$, $Y^1$, $Y^2$, $R^1$ und $R^2$ wie oben angegeben definiert sind, dadurch gekennzeichnet, daß die Kupplung in Gegenwart eines oder mehrerer Polyglykole auf Basis von Fettalkoholen und in Abwesenheit eines Carbonsäureesters durchgeführt wird.

2. Verfahren gemäß Anspruch 1, dadurch gekennzeichnet, daß $X^1$ und $X^2$ Nitro, $X^3$ Chlor oder Brom, $Y^1$ Methoxy oder Ethoxy, $Y^2$ Acetylamino und $R^1$ und $R^2$ Acetoxyethyl bedeuten.

3. Verfahren gemäß Anspruch 1 und/oder 2, dadurch gekennzeichnet, daß Polyglykole auf Basis von Fettalkoholen eingesetzt werden, die durch Umsetzung von gesättigten oder ungesättigten Fettalkoholen mit 10 bis 20 Kohlenstoffatomen mit 5 bis 25 Mol Ethylenoxid erhalten werden können.

4. Verfahren gemäß Anspruch 3, dadurch gekennzeichnet, daß als Fettalkohole Isotridecylalkohol, gesättigte Kokosfettalkohole mit 10 bis 18 Kohlenstoffatomen, gesättigte Talgfettalkohole mit 16 bis 18 Kohlenstoffatomen, ungesättigte Oleylalkohole mit 16 bis 18 Kohlenstoffatomen oder Stearylalkohol eingesetzt werden.

5. Verfahren gemäß einem oder mehreren der Ansprüche 1 bis 4, dadurch gekennzeichnet, daß die Polyglykole auf Basis von Fettalkoholen die allgemeine Formel IV

$RO(CH_2CH_2O)_nH$ (IV)

worin
R ($C_{10}$-$C_{18}$)-Alkyl oder ($C_{10}$-$C_{18}$)-Alkenyl und
n eine Zahl von 5 bis 25
bedeuten, aufweisen.

6. Verfahren gemäß einem oder mehreren der Ansprüche 1 bis 5, dadurch gekennzeichnet, daß die Polyglykole auf Basis von Fettalkoholen einen HLB-Wert von 11 bis 16, besonders bevorzugt von 12 bis 15, aufweisen.

7. Verfahren gemäß einem oder mehreren der Ansprüche 1 bis 6, dadurch gekennzeichnet, daß Polyglykole auf Basis von Fettalkoholen in Mengen von 0,1 bis 5 Gew.%, besonders bevorzugt 0,2 bis 2 Gew.%, bezogen auf die erhaltene Farbstoffmenge, trocken gerechnet, eingesetzt werden.

8. Verfahren gemäß einem oder mehreren der Ansprüche 1 bis 7, dadurch gekennzeichnet, daß die Polyglykole auf Basis von Fettalkoholen der Lösung oder Suspension der Verbindung der allgemeinen Formel III zugesetzt werden.

**9.** Verfahren gemäß einem oder mehreren der Ansprüche 1 bis 8, dadurch gekennzeichnet, daß bei der Kupplung die Lösung oder Dispersion des aus der Verbindung der allgemeinen Formel II erhaltenen Diazoniumsalzes in die Lösung oder Dispersion der Verbindung der allgemeinen Formel III eingetragen werden.

**10.** Verfahren gemäß einem oder mehreren der Ansprüche 1 bis 9, dadurch gekennzeichnet, daß die Kupplung bei Temperaturen von -10 bis 80 °C, vorzugsweise bei -5 bis 30 °C, ganz besonders bevorzugt bei 0 bis 20 °C, durchgeführt wird.

Europäisches Patentamt

# EUROPÄISCHER RECHERCHENBERICHT

Nummer der Anmeldung
EP 94 11 6119

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | CHEMICAL ABSTRACTS, vol. 76, no. 18, 1. Mai 1972, Columbus, Ohio, US; abstract no. 101209z, Seite 85-86 ; * Zusammenfassung * | 1-10 | C09B41/00<br>C09B67/00 |
| X | & CS-A-138 534 (VYSKOCIL ET AL) 10. Oktober 1970 | 1-10 | |
| Y | DD-A-208 477 (VEB CHEMIEKOMBINAT BITTERFELD) * das ganze Dokument * | 1-10 | |
| Y | EP-A-0 031 478 (HOECHST) * Seite 1, Zeile 1 - Seite 3, Zeile 6 * | 1-10 | |
| D,A | EP-A-0 240 902 (CASSELLA) * Seite 5, Zeile 36 - Zeile 54; Beispiel 8 * | 1-10 | |
| D,A | EP-A-0 563 975 (HOECHST MITSUBISHI KASEI) * Zusammenfassung * | 1-10 | |
| | | | **RECHERCHIERTE SACHGEBIETE (Int.Cl.6)** |
| | | | C09B |

Der vorliegende Recherchenbericht wurde für alle Patentansprüche erstellt

| Recherchenort | Abschlußdatum der Recherche | Prüfer |
|---|---|---|
| DEN HAAG | 23. Dezember 1994 | Dauksch, H |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)